# EUROPEAN PATENT APPLICATION

(11) **EP 1 712 932 A1**
(43) Date of publication of application: **18.10.2006**
(21) Application number: 05008098.5
(22) Date of filing: 13.04.2005
(51) Int. Cl.: G01T 1/11

(54) **Dosimeter with phosphor substance in the cover layer of an electronic chip**

(71) Applicant: GSF-Forschungszentrum für Umwelt und Gesundheit GmbH, 85764 Neuherberg (DE)
(72) Inventor: Göksu, Hayriye Yeter Dr., 80805 München (DE); Jacob, Peter Dr., 85764 Oberschleissheim (DE)
(74) Representative: Hertz, Oliver

(57) **Abstract**

A dosimeter (10) for measuring doses of ionizing radiation, comprises a carrier (11) supporting an electronic chip (12), and a protecting cover layer (13) arranged on the chip (12), wherein the cover layer (13) contains at least one radiation sensitive material, wherein the radiation sensitive material comprises a phosphor substance adapted for thermo-luminescence measurements. Furthermore, a method of measuring doses of ionizing radiation are described.

## Description

The invention relates to dosimeters for measuring ionizing radiation, to the use of smart cards, chip cards or memory chips as dosimeters, and to methods of measuring doses of ionizing radiation.

There is growing concern in the public about accidental radiation exposures due to the aging of the nuclear power industry, illegal dumping of nuclear waste, or terrorist activities, which may result in health risks to individuals. Conventionally, individual exposure radiation can be measured only if each individual carries a particular dosimeter for measuring doses of ionizing radiation. In terms of costs and complexity, carrying of dosimeters is limited to individuals having an increased risk of radiation exposure.

As an alternative, exposures of individuals can be estimated on the basis of using biological material (blood or dental enamel) or theoretical models. These techniques suffer from instability and low detection sensitivity. Furthermore, measurement of dental enamel has a disadvantage that it requires an extraction of dental enamel from the individual. Finally, the theoretical simulation has the disadvantage of reduced precision and reliability.

H. Y. Gbksu has found that certain types of telephone chip cards can be used as radiation detectors for individuals exposed to external gamma doses ("Radiation Measurements", volume 37, 2003, p. 617-620). The main advantage of chip cards as personal dosimeters is that almost every individual possesses a chip card either in the form of health-care identity cards or as a phone card. In case of accidental radiation, chip cards can be collected and used for the assessment of radiation doses to individuals. H. Y. Göksu has described that the radiation dose can be determined using optical or thermal stimulations of the chip cards.

The reported technique of H. Y. Göksu represented a certain progress in terms of lowcost dosimetry, but its practical applications are limited due to the low detection sensitivity and high detection limit. However, detection limits below 100 mGy are necessary for medical and biological applications.

The object of the invention is to provide an improved dosimeter for measuring doses of ionising radiation, said dosimeter having an increased sensitivity and increased precision even with low doses. Furthermore, the object of the invention is to provide improved methods of measuring doses of ionising radiation.

These objects are solved with dosimeters, electronic chips and methods comprising the features of claims 1, 11 or 12, respectively. Preferred embodiments and applications of the invention are defined in the dependent claims.

According to a first aspect of the invention, a dosimeter comprises a combination of an electronic chip with a protecting enclosure which contains as a radiation sensitive material at least one phosphor substance being adapted for thermally stimulated luminescence after absorption of ionizing radiation. Preferably, the protecting enclosure comprises a protecting cover layer (insulating layer) arranged on at least one side of the electronic chip. In contrast to the conventional telephone chip cards tested for dose measurements, the dosimeter of the present invention is characterised by a modified cover layer of the chip. The present inventor has found the surprising result that embedding a luminescent phosphor into the cover layer (e.g. a globe-top layer) does not deteriorate the protecting function of the layer or the luminescent property of the phosphor. In fact, the inventor has found an excellent durability of the combination of the chip and the cover layer as well as an essentially increased sensitivity for measuring doses of ionising radiation. In particular, with dosimeters of the present invention, the detection limit of 10 mGy and below has been obtained. With the increased sensitivity obtained with the present, measurement of the dose can be conducted quicker and easier. This represents an essential advantage even for quick measurements I emergency situations.

An essential advantage of the present invention is given by the fact that the combination of the electronic chip with the modified cover layer can be carried by each individual within chip cards or smart cards or other devices containing the modified cover layer on the chip like integrated memory chips or transponder chips.

In the present specification, the term "chip" refers to any type of electronic circuit structure, which may contain a memory, a microprocessor, a transponder or the like. A "chip card" or "smart card" refers to a card with a plastic carrier supporting a chip that enables the holder to perform certain operations being related to data storage in or represented by a chip. The term "cover layer" refers to any type of insulating enclosure of a chip, like e.g. the globe top layer or the cover of an integrated circuit. The term "phosphor substance" refers to any substance being capable of stimulated luminescence after exposure to radiation. The phosphor substance used here has a energy response (ratio of stimulated luminescence at 30 keV to photons of 1.1 MeV from ⁶⁰Co) of at least 1, preferably 1.3 or higher. The term "thermally stimulated luminescence measurement" refers to any type of measuring (detecting) light emitted from a sample in response to a thermal stimulation, like e.g. heating or infrared radiation.

According to a preferred embodiment of the invention, the phosphor substance embedded as the radiation sensitive material in the cover layer comprises LiF, Al₂O₃ and/or BeO.
These phosphors, which may be doped as conventionally known in the art, are commercially available. Advantageously, these phosphor substances have a high sensitivity and stability in the plastic cover layer materials. Using LiF and/or BeO has an advantage in that they have an energy response close to 1. Accordingly, they can serve as tissue equivalent phosphors. The energy response of Al₂O₃ is higher (2.3), so that Al₂O₃ is preferred for environmental investigations. Embedding BeO in the cover layer may have particular advantages as BeO can be used both as phosphor substance and as filling material.

Preferably, the cover layer comprises a transparent resin. The resin is capable of transmitting at least visible light and possibly even infrared light. This embodiment of the invention has the particular advantage of an increased quantum yield of the thermally stimulated luminescence measurement.

If the cover layer contained in the dosimeter of the invention comprises a transparent epoxy resin, advantages can be obtained in terms of a homogeneous distribution of the phosphor substance(s) during the deposition of the cover layer on the electronic grip. Furthermore, epoxy resins provide a stable embedding of the phosphor substance.

Generally, the increased sensitivity of the dosimeter according to the invention can be obtained with various phosphor substance concentrations depending on the particular phosphor substance embedded in the cover layer. If the phosphor substance is embedded with a concentration in the range of 0.1 weight-% to 10 weight-%, preferably in the range of 2 weight-% to 6 weight-%, particular advantages are obtained with regard to the stability of the cover layer and the quantum yield of luminescence measurements. On the other hand, if the phosphor substance, like e.g. BeO is used as filling substance, higher concentrations up to e. g. 50 weight-% can be selected.

Phosphor substances which can be used for thermally stimulated measurements are commercially available e.g. as crystalline grains. Particularly increased sensitivity of the dosimeter has been obtained by the inventor with phosphor substances selected to have an average crystalline grain size smaller than 50 µm, preferably smaller than 10 µm. This grain size range allows in particular an improved homogeneous distribution and quantum yield of luminescence. Alternatively, the average grain size may be increased up to the dimension of the protecting enclosure, e. g. up to 1 mm or even a few mm.

According to a further modification of the invention, the protecting cover layer arranged on or around the chip may comprise an additional filling material, like e.g. SiO₂ embedded in a binding material, e. g. epoxy resin. The provision of the filling material may represent an advantage with regard to the protecting function of the cover layer.

Preferably, the invention is applied in manufacturing smart cards or chip cards or electronic memory chips, like e.g. telephone cards, personal ID-cards or credit or banking cards.

According to a further aspect of the invention, the above object is solved by an electronic chip having a protecting cover layer, into which a phosphor substance is embedded, wherein the phosphor substance is capable of thermally stimulated luminescence emission. Preferably, the cover layer and the phosphor substance are selected according to at least one of the above features of the dosimeter according to the invention.

According to a further aspect of the invention, the above object is solved by a method of measuring doses of ionising radiation, wherein thermally stimulated luminescence is measured with a dosimeter sample containing at least a part of the above modified protecting cover layer of an electronic chip. Particularly preferred is the measurement of a glow curve with a dosimeter sample as measurement equipment for this type of luminescence measurement is available.

Further details and advantages of the invention are described in the following with reference to the attached drawing. The drawings show:
- Fig. 1:: a schematic enlarged cross-sectional view of a dosimeter according to the invention, and
- Figs. 2 to 4:: experimental results obtained with dosimeters according to the invention.

The present invention is described in the following with reference to a preferred embodiment represented by a telephone card with a modified globe top layer on the card chip. It is emphasized that the implementation of the invention is not restricted to this embodiment. Embedding of highly sensitive phosphor substances is possible in an analogue way with chip enclosures in other types of chip cards or smart cards or integrated memories. Furthermore, the implementation of the invention is not restricted to the phosphor substances exemplified below. Alternatively, other phosphor substances, preferably having a similar sensitivity can be used.

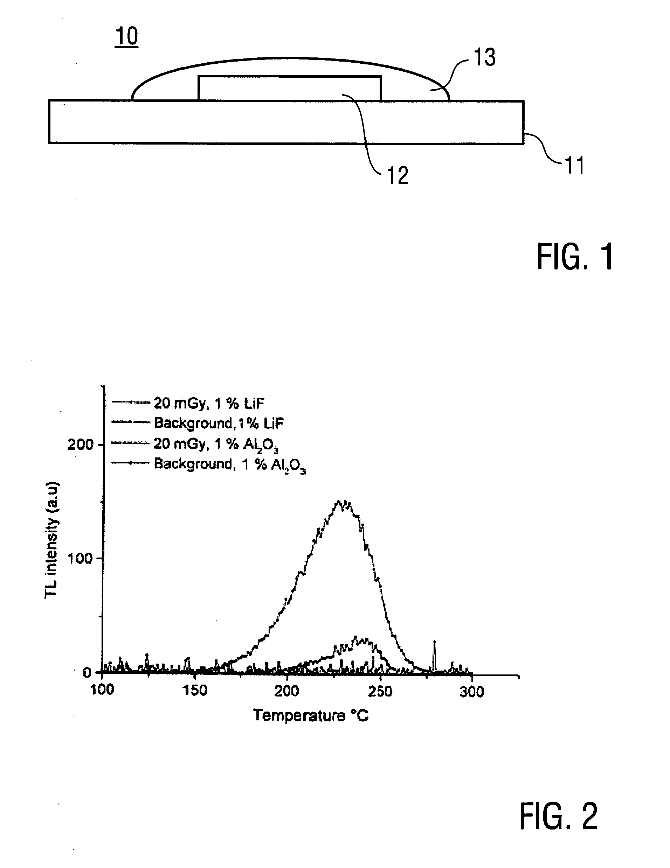

Figure 1 schematically illustrates a cross-sectional view of a dosimeter 10 according to the invention, which comprises a carrier card 11 and electronic chip 12 and a protecting layer 13. The carrier card 11 is a single or multilayer plastic card as is known in the art. The carrier card comprises e.g. glue and glass fibres (45% SiO₂). In the illustrated embodiment, the chip 12 is a telephone chip containing in particular a memory with a telephone account or any other identification data. The protecting layer 13 is shaped like a conventional globe top layer covering the chip and the conducting wires thereof. The layer 13 comprises an epoxy glue, glass fibres as a filling material and phosphor substance grains containing LiF, BeO and/or Al₂O₃. Layer 13 contains e.g. equal parts of glow and glass fibres. Examples of commercially available materials used for providing the cover layer 13 are the materials DELO and ANGAS (product names).

The cover layer 13 is deposited on the chip 12 in a liquid condition after introducing and distributing the phosphor substance in the glue with the filling material. After hardening of the protecting cover layer 13, this can be used directly for thermo-luminescence measurements (TL measurements). TL measurements are conducted directly with the cover layer 13 or with a dosimeter sample separated from the cover layer 13, e.g. by punching.

The TL measurements are conducted with a conventional luminescence reader (e.g. RISO TL/OSL DA 12, RISO National Laboratory, Denmark) containing a β-ray source for exposure of the samples. The β-ray source exposures are used for calibrating the luminescence reader and for a quality check of the cover layers 13 used as dosimeter materials.

In the luminescence reader, the dosimeter sample is heated with a heating rate of 5°C/s. During the heating, the sample is subjected to an inert gas like e.g. N-gas with an application rate of 4 1/min. The samples are heating up to 300 °C. The luminescence light stimulated by heating is subjected to an optical filter (Schrott BG 38, λ = 320 - 650 nm). The glow curve obtained represents the intensity of the luminescence light in dependence on temperature.

Figure 2 illustrates examples of glow curves obtained with 20 mGy exposure of LiF and Al₂O₃, respectively, compared with the corresponding backgrounds radiation. Figure 2 illustrates an excellent sensitivity for LiF and a reduced, but sufficient sensitivity for Al₂O₃.

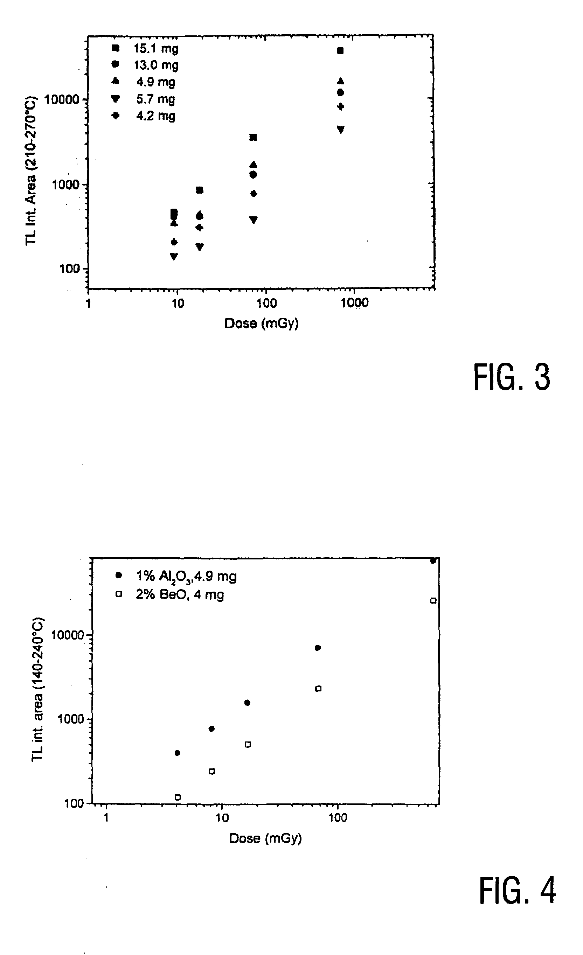

The integrated glow curve represents the so called TL intensity. Figure 3 illustrates TL intensity examples obtained with cover layers made of DELO with various sample masses (wet).

In each case, the TL intensity excited the background TL intensity by a factor of at least 3. Corresponding results for embedding Al₂O₃ and BeO into cover layers made of NAGASA and DELO respectively. Embedding of 1% Al₂O₃ provides a detection limit of 1 mGy, while the detection limit for 2% BeO is about 4 mGy. All these detection limits are essentially higher compared with the conventional globe top measurements discussed above.

## Claims

1. Dosimeter (10) for measuring doses of ionizing radiation, comprising:
- a carrier (11) supporting an electronic chip (12), and
- a protecting cover layer (13) arranged on the chip (12), wherein the cover layer (13) contains at least one radiation sensitive material,
**characterized in that**
- the radiation sensitive material comprises a phosphor substance adapted for thermo-luminescence measurements.

2. Dosimeter according to claim 1, wherein the phosphor substance is selected from at least one of LiF, Al₂O₃ and BeO.

3. Dosimeter according to claim 1 or 2, wherein the protecting cover layer (13) comprises a transparent resin.

4. Dosimeter according to claim 3, wherein the protecting cover layer (13) comprises a transparent epoxy resin.

5. Dosimeter according to at least one of the foregoing claims, wherein the phosphor substance is contained in the protecting cover layer (13) with a concentration eual or smaller than 50 w%.

6. Dosimeter according to at least one of the foregoing claims, wherein the phosphor substance is contained in the protecting cover layer (13) with a concentration in the range of 0.1 w% to 10 w%.

7. Dosimeter according to at least one of the foregoing claims, wherein the phosphor substance is contained in the in the protecting cover layer (13) as crystalline grains with an average grain size smaller than 50 µm.

8. Dosimeter according to at least one of the foregoing claims, wherein the protecting cover layer (13) further comprises a filling material.

9. Dosimeter according to at least one of the foregoing claims, wherein the carrier is a smart or chip card or an electronic memory chip.

10. Dosimeter according to claim 9, wherein the smart or chip card is part of a telephone card, personal ID card, or credit card.

11. Electronic chip being covered with a protecting cover layer containing a phosphor substance adapted for thermo-luminescence measurements.

12. Method of measuring doses of ionizing radiation, comprising the step of:
- conducting a thermo-luminescence measurement with a dosimeter sample comprising at least a part of the protecting cover layer of a dosimeter according to at least one of the foregoing claims.

13. Method according to claim 10, wherein the thermo-luminescence measurement comprises the step of:
- measuring a glow curve with the dosimeter sample.

14. Method of using a protecting cover layer for detecting ionizing radiation, said protecting cover layer containing a phosphor substance adapted for thermo-luminescence measurements.
